# EUROPEAN PATENT SPECIFICATION

(11) **EP 1 777 127 B1**
(45) Date of publication and mention of the grant of the patent: **19.11.2008**
(21) Application number: 06121290.8
(22) Date of filing: 26.09.2006
(51) Int. Cl.: B60R 22/44, B60R 22/46

(54) **Seat belt retractor, seat belt apparatus, and vehicle with seat belt apparatus**
Gurtaufroller, Sicherheitsgurtvorrichtung und Fahrzeug mit einer Sicherheitsgurtvorrichtung
Enrouleur de ceinture, dispositif de ceinture de sécurité et véhicule avec un dispositif de ceinture de sécurité

(30) Priority: 19.10.2005 JP 2005305100
(43) Date of publication of application: 25.04.2007
(73) Proprietor: TAKATA CORPORATION, Minato-ku, Tokyo 106-8510 (JP)
(72) Inventor: Tanaka, Koji, Tokyo Tokyo 106-8510 (JP); Takao, Masato, Tokyo Tokyo 106-8510 (JP); Inuzuka, Koji, Tokyo Tokyo 106-8510 (JP)
(74) Representative: Vossius & Partner

(56) References cited:
- GB-A- 2 335 890
- GB-A- 2 337 127
- JP-A- 2000 052 926

## Description

The present invention relates to a technology for developing a seat belt retractor to be installed in a vehicle.

Conventionally, a seat belt apparatus which is designed for protecting a vehicle occupant by a seat belt (webbing) for restraining the vehicle occupant is known. JP-A-2000-052926 relates to a passenger restrained and protection apparatus in which it is judged whether a vehicle door is opened or closed and, when the door is opened, a deferment time before storing a seat belt is shortened in comparison with the closing case of the door, and the wind up speed of the seat belt is quickened. For example, JP-A-2003-507252 (Patent Document 1) listed below discloses a seat belt apparatus having a seat belt retractor of such a structure that a spool (winding shaft) is driven to rotate by an electric motor so as to wind or unwind a seat belt.

The technology disclosed in Patent Document 1 is the structure of the seat belt retractor for a vehicle in which the action of winding the seat belt onto the spool is conducted by the electric motor. However, when this structure is used for the action for winding up a seat belt for the purpose of preventing the seat belt from being kept in a state unwound from the spool, that is, "seat belt storage winding action", the action of winding up the seat belt onto the spool is required to be smoothly conducted according to suitable control for the electric motor.
Specifically, during the seat belt storage winding action, the seat belt may be caught in a vehicle occupant or a vehicle seat and the seat belt may be withdrawn by the vehicle occupant. There is a following measure imaginable to this situation. That is, when the load of the seat belt is increased (increase in motor current is detected) during the seat belt storage winding action, such a control as to temporarily stop the seat belt storage winding action until factor increasing the load is removed and then restarting the seatbelt storage winding action. However, when the seat belt is caught in the vehicle occupant or the vehicle seat, not much time is required to release the seat belt from being caught. In fact, if the seat belt storage winding action is stopped for a time longer than necessary, there is a possibility that the seat belt or a tongue is jammed in a vehicle door. On the other hand, when the seat belt is withdrawn by the vehicle occupant, longer time period is required for the seat belt withdrawing operation by the vehicle occupant. Therefore, if the seat belt storage winding action is stopped only for a short time period, the seat belt storage winding action is conducted against the seat belt withdrawing operation. That is, there is a problem that the vehicle occupant feels uncomfortable. Accordingly, the inventors of the present invention thought that, to streamline the seat belt storage winding action, it is required to temporarily stop the seat belt storage winding action and to set the time interval of stoppage to suitable time commensurate with the factor of increasing the seat belt load. Consequently, the inventors figured out the present invention.
The present invention relates to seat belt storage winding action of a seat belt retractor, to be installed in a vehicle, using an electric motor for the purpose of preventing the seat belt from being kept in the unwound state and the object of the present invention is to provide a technology effective for streamlining the seat belt storage winding action.

For achieving the object, the present invention is made. The present invention can be typically adapted to a seat belt retractor to be installed in an automobile. In addition, the present invention can be adapted to a technology for developing a seat belt retractor to be installed in a vehicle other than the automobile, such as aircraft, boat, train, and bus.

The first aspect of the present invention for achieving the aforementioned object is a seat belt retractor claimed in claim 1.
The seat belt retractor claimed in claim 1 is a device to be installed in a vehicle and comprises at least an electric motor, a spool, and a control means.

The spool of this invention is a member which is operated in association with driving of the electric motor to wind or unwind a seat belt for occupant restraint. The seat belt capable of being wound onto and unwound from the spool is a long belt to be worn by a vehicle occupant seated in a seat and is sometimes called "webbing". Typically, the vehicle occupant seated in the vehicle seat is restrained by the seat belt when restraint is required such as a vehicle collision. In the present invention, if required, a power transmission mechanism may be suitably disposed between the electric motor and the spool to selectively achieve a connected state where the electric motor and the spool are connected and a disconnected state where the connected state is cancelled. Also in the present invention, the seat belt winding action by the spool may be conducted only by the driving force of the electric motor or by the winding force of an elastic member such as a return spring acting on the spool and the driving force of the electric motor as secondary force.

The control means of the present invention is adapted at least as a means for controlling the driving of the electric motor and controls the driving direction, the driving time, and the driving force of the electric motor. The control means is typically composed of a CPU (central processing unit), an input/output unit, a storage unit, a peripheral unit, and the like. The control means may be provided exclusively for the seat belt retractor of the present invention or used also for other control means for controlling driving system and/or electric system of the vehicle.

Specifically, seat belt storage starting condition is defined by information about the state of said seat belt relative to a vehicle occupant, i.e. whether or not the seat belt is worn, and information about the state of a vehicle door corresponding to said seat belt, i.e. whether or not the door is open. When said seat belt storage starting condition is satisfied, the control means of the present invention controls the driving of the electric motor to rotate the spool to wind up the seat belt. The driving control enables an action winding up the seat belt onto the spool, so-called "seat belt storage winding action", while preventing the seat belt from being kept in the unwound state from the spool.

By the way, during the seat belt storage winding action, the seat belt may be caught in a vehicle occupant or a vehicle seat and the seat belt may be withdrawn by the vehicle occupant. In the present invention, during the seat belt storage winding action, when the seat belt load acting on the seat belt is increased during the driving control of the electric motor, the control means is adapted to temporarily stop (halt) the driving control until the factor increasing the load is removed. With regard to the stoppage of the driving control, it is required to change the suitable stoppage time between cases that the factor increasing the seat belt load is catch of the seat belt in the vehicle occupant or the vehicle seat and cases that the factor is the seat belt withdrawing operation by the vehicle occupant. That is, when the seat belt is caught in the vehicle occupant or the vehicle seat, not much time is required to release the seat belt from being caught. In fact, if the seat belt storage winding action is stopped for a time longer than necessary, there is a possibility that the seat belt or a tongue is jammed in a vehicle door. On the other hand, when the seat belt is withdrawn by the vehicle occupant, longer time period is required for the seat belt withdrawing operation by the vehicle occupant. Therefore, if the seat belt storage winding action is stopped only for a short time period, the seat belt storage winding action is conducted against the seat belt withdrawing operation. That is, there is a problem that the vehicle occupant feels uncomfortable.

In the present invention, the seat belt storage winding action is temporarily stopped by stopping the driving of the electric motor as load of a seat belt is increased during the seat belt storage winding action, and the time period (interval) of the stoppage is set to be suitable time period commensurate with the factor increasing the seat belt load. That is, in the present invention, the start of the seat belt storage action is defined by the combination of the state of said seat belt relative to a vehicle occupant (the worn state or the wearing-cancelled state) and the state of the vehicle door (the open state or the closed state) and the stoppage time period is varied according to the satisfaction pattern of the starting condition for the seat belt storage winding action. Satisfaction patterns of the starting condition for the seat belt storage winding action may be suitably set according to the combination of the state of the seat belt and the state of the vehicle door and the satisfying order. The number of the satisfaction patterns can be set according to need.

With regard to the satisfaction of the seat belt storage starting condition, specifically, the seat belt storage starting condition is satisfied when the seat belt is changed from the worn state to the wearing-cancelled state relative to the vehicle occupant or when it is detected that the seat belt is in the wearing-cancelled state relative to the vehicle occupant. As the satisfaction patterns of the seat belt storage starting condition, specifically, a pattern that the seat belt is changed from the worn state to the wearing-cancelled state relative to the vehicle occupant, a pattern that the seat belt is changed from the worn state to the wearing-cancelled state relative to the vehicle occupant and the vehicle door is in the open state, a pattern that the vehicle door is changed from the open state to the closed state and the seat belt is in the wearing-cancelled state relative to the vehicle occupant, a pattern that the vehicle door is changed from the closed state to the open state and the seat belt is in the wearing-cancelled state relative to the vehicle occupant may be employed.

As mentioned above, according to the invention of claim 1, the seat belt storage winding action is temporarily stopped when the seat belt load is increased during the seat belt storage winding action and the stoppage time period is set to a suitable time period commensurate with the factor increasing the seat belt load, thereby enabling the streamlining of the seat belt storage winding action. Accordingly, a seat belt retractor capable of streamlining the seat belt storage winding action is provided.

The second aspect of the present invention for achieving the aforementioned object is a seat belt retractor as claimed in claim 2.
In the seat belt retractor claimed in claim 2, in case of a first satisfaction pattern of the seat belt storage starting condition where the vehicle door corresponding to the seat belt is in the open state when the wearing of the seat belt relative to the vehicle occupant is cancelled, the control means as claimed in claim 1 controls the driving of the electric motor to rotate the spool to wind up the seat belt and sets the stoppage time period of the electric motor to a first stoppage time period. On the other hand, in case of a second satisfaction pattern of the seat belt storage starting condition where the vehicle door corresponding to the seat belt is in the closed state when the wearing of the seat belt relative to the vehicle occupant is cancelled, the control means controls the driving of the electric motor to rotate the spool to wind up the seat belt and sets the stoppage time period of the electric motor to a second time period longer than the first time period. That is, the stoppage time period in case of the first satisfaction pattern of the seat belt storage starting condition is shorter than the stoppage time period in case of the second satisfaction pattern of the seat belt storage starting condition.

The stoppage time period for the first satisfaction pattern of the seat belt storage starting condition is set based on the ideas that when the vehicle door is in the open state, there is less possibility that the factor increasing the seat belt load is the operation of withdrawing the seat belt by the vehicle occupant and there is high possibility that the factor is the catch of the seat belt in the vehicle occupant or the vehicle seat so that not much time is required to release the seat belt from being caught. Therefore, it can prevent the seat belt storage winding action from being stopped for a time longer than necessary, thereby preventing the occurrence of jamming of the seat belt or the tongue in the vehicle door. On the other hand, The stoppage time period for the second satisfaction pattern of the seat belt storage starting condition is set based on the ideas that when the vehicle door is in the closed state, there is high possibility that the factor increasing the seat belt load is the operation of withdrawing the seat belt by the vehicle occupant so that longer time is required for the withdrawing operation. Therefore, it can prevent the seat belt storage winding action from being conducted against the seat belt withdrawing operation, thereby preventing the vehicle occupant from feeling uncomfortable.

As mentioned above, according to the invention of claim 2, with regard to the stoppage of driving control of the electric motor when the seat belt load is increased, the stoppage time period in case of the first satisfaction pattern of the seat belt storage starting condition is set to be shorter than the stoppage time period in case of the second satisfaction pattern of the seat belt storage starting condition, thereby setting the suitable stoppage time period commensurate with the factor increasing the seat belt load and thus streamlining the seat belt storage winding action.

The third aspect of the present invention for achieving the aforementioned object is a seat belt retractor claimed in claim 3.
In the seat belt retractor claimed in claim 3, in cases of a satisfaction pattern of the seat belt storage starting condition where the wearing of the seat belt is cancelled when the vehicle door corresponding to the seat belt is closed, the control means as claimed in claim 1 sets the stoppage time period of the electric motor to be longer than a reference stoppage time period.
The stoppage time period for the satisfaction pattern of the seat belt storage starting condition of this invention is set based on the ideas that when the vehicle door is in the closed state, there is high possibility that the factor increasing the seat belt load is the operation of withdrawing the seat belt by the vehicle occupant so that longer time is required for the withdrawing operation. Therefore, it can prevent the seat belt storage winding action from being conducted against the seat belt withdrawing operation, thereby preventing the vehicle occupant from feeling uncomfortable.

As mentioned above, according to the invention of claim 3, with regard to the stoppage of driving control of the electric motor when the seat belt load is increased, the stoppage time period in case where the wearing of the seat belt is cancelled relative to the vehicle occupant when the vehicle door corresponding to the seat belt is closed is set to be longer than a reference stoppage time period, thereby enabling the setting of the suitable stoppage time period commensurate with the factor increasing the seat belt load and thus streamlining the seat belt storage winding action.

The fourth aspect of the present invention for achieving the aforementioned object is a seat belt retractor claimed in claim 4.
In the seat belt retractor claimed in claim 4, in case of a satisfaction pattern of the seat belt storage starting condition where the wearing of the seat belt is cancelled when the vehicle door corresponding to the seat belt is opened, the control means as claimed in claim 1 sets the stoppage time period of the electric motor to be shorter than a reference stoppage time period.
The stoppage time period for the satisfaction pattern of the seat belt storage starting condition of this invention is set based on the ideas that when the vehicle door is in the open state, there is less possibility that the factor increasing the seat belt load is the operation of withdrawing the seat belt by the vehicle occupant and there is high possibility that the factor is the catch of the seat belt in the vehicle occupant or the vehicle seat so that not much time is required to release the seat belt from being caught. Therefore, it can prevent the seat belt storage winding action from being stopped for a time longer than necessary, thereby preventing the occurrence of jamming of the seat belt or the tongue in the vehicle door.

As mentioned above, according to the invention of claim 4, with regard to the stoppage of driving control of the electric motor when the seat belt load is increased, the stoppage time period in case where the wearing of the seat belt is cancelled relative to the vehicle occupant when the vehicle door corresponding to the seat belt is opened is set to be shorter than a reference stoppage time period, thereby enabling the setting of the suitable stoppage time period commensurate with the factor increasing the seat belt load and thus streamlining the seat belt storage winding action.

The fifth aspect of the present invention for achieving the aforementioned object is a seat belt apparatus as claimed in claim 5.
The seat belt apparatus claimed in claim 5 is an apparatus to be installed in a vehicle and comprises at least a seat belt for occupant restraint, an electric motor, a spool, a control means, a seat belt buckle, a tongue, a buckle detection sensor, and a current detection sensor.
The seat belt of the present invention is a long belt to be worn by a vehicle occupant seated in a seat and is sometimes called "webbing". Typically, the vehicle occupant seated in the vehicle seat is restrained by the seat belt when restraint is required such as a vehicle collision. The seat belt buckle of the present invention is a member fixed to a vehicle body. The tongue of the present invention is a member which is attached to the seat belt and is latched to the seat belt buckle when the seat belt is worn by the vehicle occupant. The buckle detection sensor of the present invention is a means for detecting that the tongue is latched to the seat belt buckle. The current detection sensor is a means for detecting current value of the electric motor. The electric motor and the spool of this invention have substantially the same functions as those of the seat belt retractor claimed in claim 1.

The control means of the present invention determines whether or not the seat belt is worn by a vehicle occupant based on information detected by the buckle detection sensor. The seat belt storage starting condition is defined by information about the state of said seat belt relative to a vehicle occupant, i.e. whether or not the seat belt is worn, and the state of a vehicle door corresponding to said seat belt, i.e. whether or not the door is open. When said seat belt storage starting condition is satisfied, the control means controls the driving of the electric motor to rotate the spool to wind up the seat belt. When the control means of this invention determines that the seat belt load acting on the seat belt is increased based on the information from the current detection sensor during the seat belt storage winding action, the control means is adapted to temporarily stop (halt) the driving control and sets the stoppage time period according to the satisfaction pattern of the seat belt storage starting condition. As mentioned above, the control means of this invention has substantially the same function as that of the control means as claimed in claim 1.

As mentioned above, according to the invention of claim 5, the seat belt storage winding action is temporarily stopped when the seat belt load is increased during the seat belt storage winding action by the seat belt apparatus and the stoppage time period is set to a suitable time period commensurate with the factor increasing the seat belt load, thereby enabling the streamlining of the seat belt storage winding action. Accordingly, the invention provides a seat belt apparatus capable of streamlining the seat belt storage winding action using the electric motor.

The sixth aspect of the present invention for achieving the aforementioned object is a seat belt apparatus as claimed in claim 6.
In the seat belt apparatus claimed in claim 6, the control means as claimed in claim 5 has substantially the same structure as that of the control means in the seat belt retractor as claimed in claim 2.
Therefore, according to the invention of claim 6, with regard to the stoppage of driving control of the electric motor when the seat belt load is increased, the stoppage time period in case of the first satisfaction pattern of the seat belt storage starting condition is set shorter than the stoppage time period in case of the second satisfaction pattern of the seat belt storage starting condition, thereby enabling the setting of the suitable stoppage time period commensurate with the factor increasing the seat belt load and thus streamlining the seat belt storage winding action.

The seventh aspect of the present invention for achieving the aforementioned object is a seat belt apparatus as claimed in claim 7.
In the seat belt apparatus claimed in claim 7, the control means as claimed in claim 5 has substantially the same structure as that of the control means in the seat belt retractor as claimed in claim 3.
Therefore, according to the invention of claim 7, with regard to the stoppage of driving control of the electric motor when the seat belt load is increased, the stoppage time period in case where the wearing of the seat belt is cancelled relative to the vehicle occupant when the vehicle door corresponding to the seat belt is closed is set to be longer than the reference stoppage time period, thereby enabling the setting of the suitable stoppage time period commensurate with the factor increasing the seat belt load and thus streamlining the seat belt storage winding action.

The eighth aspect of the present invention for achieving the aforementioned object is a seat belt apparatus as claimed in claim 8.
In the seat belt apparatus claimed in claim 8, the control means as claimed in claim 5 has substantially the same structure as that of the control means in the seat belt retractor as claimed in claim 4.
Therefore, according to the invention of claim 8, with regard to the stoppage of driving control of the electric motor when the seat belt load is increased, the stoppage time period in case where the wearing of the seat belt is cancelled relative to the vehicle occupant when the vehicle door corresponding to the seat belt is opened is set to be shorter than the reference stoppage time period, thereby enabling the setting of the suitable stoppage time period commensurate with the factor increasing the seat belt load and thus streamlining the seat belt storage winding action.

The ninth aspect of the present invention for achieving the aforementioned object is a vehicle with a seat belt apparatus claimed in claim 9.
The vehicle with a seat belt apparatus claimed in claim 9 comprises at least a seat belt apparatus as claimed in any one of claims 5 through 8. In the vehicle of the present invention, the seat belt apparatus is accommodated in an accommodating space in the vehicle such as an accommodating space in a pillar, an accommodating space in a seat, or an accommodating space in another part of the vehicle.
Accordingly, the invention claimed in claim 9 provides a vehicle comprising a seat belt apparatus which enables the streamlining of the seat belt storage winding action using the electric motor, wherein the seat belt apparatus is accommodated in an accommodating space in the vehicle.

As mentioned above, the present invention enables streamlining of the seat belt storage winding action using an electric motor by the following structure. That is, in a seat belt retractor to be installed in a vehicle, the seat belt storage winding action is temporarily stopped by stopping the driving of the electric motor according to increase of the seat belt load during the seat belt storage winding action, and the time period (interval) of the stoppage is set to be suitable time period commensurate with the factor increasing the seat belt load.

Hereinafter, embodiments of the present invention will be described in detail with reference to drawings.
Fig. 1 is an illustration schematically showing the structure of a seat belt apparatus 100 according to an embodiment;
Fig. 2 is an illustration showing the schematic structure of a seat belt retractor 1 shown in Fig. 1;
Fig. 3 is a flow chart showing the retractor control process A according to the embodiment;
Fig. 4 is a flow chart showing the retractor control process B according to the embodiment; and
Fig. 5 is a flow chart showing the retractor control process C according to the embodiment. First, description will be made as regard to a seat belt apparatus 100 as an embodiment of "seat belt apparatus" of the present invention with reference to Fig. 1 and Fig. 2. Fig. 1 is an illustration schematically showing the entire structure of the seat belt apparatus 100 of an embodiment of the present invention. Fig. 2 is an illustration showing the schematic structure of a seat belt retractor 1 shown in Fig. 1.

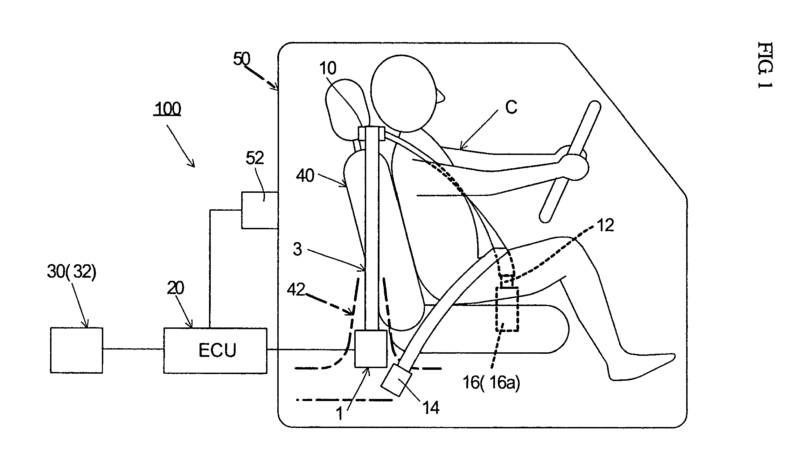

As shown in Fig. 1, the seat belt apparatus 100 of this embodiment is a seat belt apparatus for a vehicle to be installed in an automotive vehicle as "vehicle with the seat belt apparatus" of the present invention and is mainly composed of a seat belt retractor 1, a seat belt 3, a deflection fitting 10, a tongue 12, an outer anchor 14, a seat belt buckle 16, and an ECU 20. In addition, an input element 30 is installed in the vehicle to detect information about collision prediction or collision occurrence of the vehicle, information about the driving state of the vehicle, information about the sitting position and the body size of a vehicle occupant seated in a seat, information about traffic conditions around the vehicle, information about weather condition and about time zone, and the like and to input such detected information to the ECU 20. The detected information of the input element 30 is transmitted to the ECU 20 anytime or at predetermined intervals and is used for the operation control of the seat belt apparatus 100 and the like.

The input element 30 of this embodiment includes a collision information detection sensor 32 for detecting information about a vehicle collision such as a prediction of a vehicle collision and an occurrence of actual vehicle collision. The collision information detection sensor 32 is a sensor capable of detecting (measuring) information (signal) about distance, speed, and acceleration of a collision object (another vehicle, an obstacle, a pedestrian, or the like) relative to the subject vehicle and also detecting (measuring) accelerations in three-axial (X-axis, Y-axis, and Z-axis) directions acting on the subject vehicle. The collision information detection sensor 32 may be composed of a single detection sensor or a combination of plural single detection sensors. Specifically, millimeter wave radar, laser radar, acceleration sensor, and camera sensor may be used as the collision information detection sensor 32.

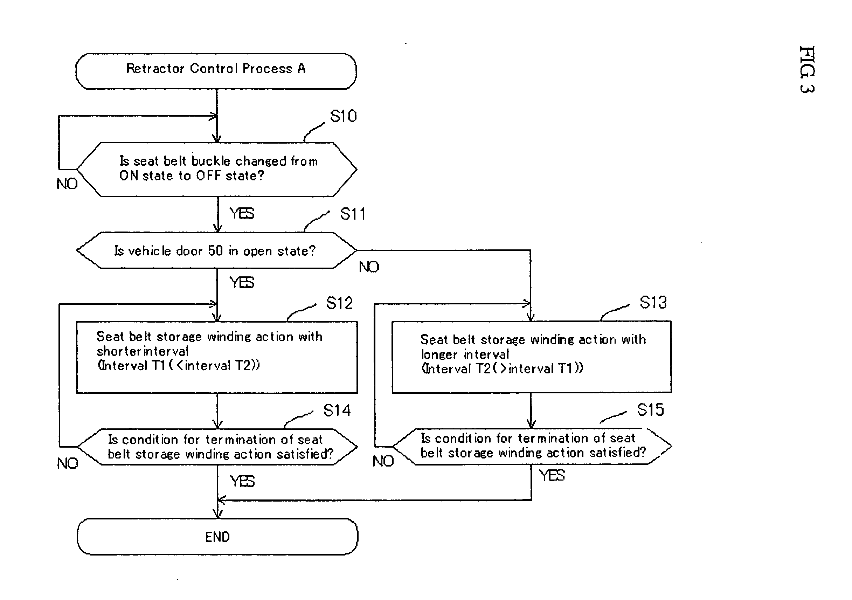

In this embodiment, a vehicle door sensor 52 mounted on the vehicle is adapted to detect the opening/closing state of a vehicle door 50, that is, detect whether the vehicle door 50 is in the open state or closed state. As the vehicle door sensor 52, for example, a contact sensor which comprises a first contact on the vehicle door side and a second contact on a vehicle pillar side and can detect the opening/closing of the vehicle door according to the contact between the first contact and the second contact may be employed. The vehicle door sensor 52 may be considered as a component of the seat belt retractor 1 or the seat belt apparatus 100. The information detected by the vehicle door sensor 52 is transmitted to the ECU 20 and is used for "retractor control process A", "retractor control process B", and "retractor control process C" as will be described later with regard to Fig. 3.

The seat belt 3 is a long belt (webbing) to be used for restraining a vehicle occupant C (sometimes referred to as "driver") seated in a vehicle seat 40 as a driver's seat. The seat belt 3 corresponds to the "seat belt for occupant restraint" of the present invention. The seat belt 3 is withdrawn from the seat belt retractor 1 fixed relative to the vehicle and extends through a deflection fitting 10 provided around an area about the shoulder of the vehicle occupant C and is connected to an outer anchor 14 through a tongue 12. The deflection fitting 10 has a function of holding the seat belt 3 to the area about the shoulder of the occupant C and guiding the seat belt 3. By inserting the tongue 12 to a seat belt buckle 16 fixed to the vehicle body, the seat belt 3 becomes into the state worn by the vehicle occupant C. The tongue 12 corresponds to the "tongue" of the present invention and the seat belt buckle 16 to which the tongue 12 can be latched corresponds to the "seat belt buckle" of the present invention.

The seat belt buckle 16 has a built-in buckle switch 16a. The buckle switch 16a is adapted to detect that the tongue 12 is inserted into the seat belt buckle 16. That is, the buckle switch 16a detects buckle ON operation (actually, detects that the seat belt becomes into the worn state). The information detected by the buckle switch 16a is transmitted to the ECU 20 which determines whether the seat belt 3 is in the worn state or in the wearing-cancelled state. The buckle switch 16a corresponds to the "buckle detection sensor for detecting that the tongue is latched to the seat belt buckle" of the present invention.

The seat belt retractor 1 is a device capable of performing the action of winding or unwinding the seat belt 3 via a spool 5 and a motor 7 as will be described later. The seat belt retractor 1 corresponds to the "seat belt retractor" of the present invention. The retractor 1 is installed in an accommodating space in a B-pillar 42 of the vehicle in the embodiment shown in Fig. 1.

The ECU 20 has a function of conducting the control of the seat belt retractor 1 and other operational mechanisms based on the input signals from the input element 30 and comprises a CPU (Central processing unit), an input/output unit, a storage unit, a peripheral unit, and the like. Particularly in this embodiment, the ECU 20 controls the motor 7, as will be described later, of the seat belt retractor 1. Specifically, the ECU 20 controls the amount of current supplied to an electromagnetic coil of the motor 7 and the direction of the current supply so as to vary the rotational speed, the rotational direction, the rotational period of time, and the rotational torque (output) of a shaft of the motor 7. The ECU 20 is structured as a means for controlling the driving of the motor 7 and controlling a power transmission mechanism 9, as will be described later, to switch between the state where the power of the motor 7 is transmitted to the spool 5 and the state where the power is not transmitted to the spool 5. The ECU 20 corresponds to the "control means" of the present invention. The ECU 20 may be exclusive to the seat belt retractor 1 or used also for other control means for controlling driving system and/or electric system.

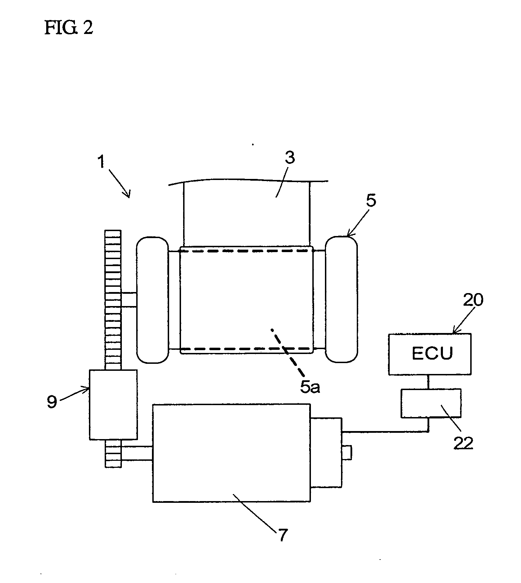

As shown in Fig. 2, the seat belt retractor 1 is mainly composed of the spool 5, the motor 7, and the power transmission mechanism 9.

The spool 5 is formed in a columnar or cylindrical shape of which outer periphery (seat belt contact face) functions as the wind-up surface on which the seat belt 3 is wound. The spool 5 performs the action of winding the seat belt 3 onto the wind-up surface 5a by rotating in the seat belt winding direction and also performs the action of unwinding the seat belt 3 from the wind-up surface 5a by rotating in the seat belt unwinding direction. The spool 5 corresponds to the "spool" of the present invention.

The motor 7 is structured as an electric motor and is adapted to transmit power to the spool 5 through the power transmission mechanism 9. The motor 7 rotates in such a direction that the spool 5 performs the action of winding the seat belt 3 when the motor is controlled to rotate in the seat belt winding direction, while the motor 7 rotates in such a direction that the spool 5 performs the action of unwinding the seat belt 3 when the motor is controlled to rotate in the seat belt unwinding direction. The motor 7 corresponds to "electric motor" of the present invention. In this embodiment, the seat belt retractor 1 is also provided with a motor current detector 22 for detecting current value of the motor 7. The motor current detector 22 corresponds to "current detection sensor for detecting the current value of the electric motor" of the present invention. Information about current value detected by the motor current detector 22 is transmitted to the ECU 20 and is used for determination "increase in seat belt load" as will be described later.

Te power transmission mechanism 9 is arranged between the spool 5 and the motor 7 and functions as a mechanism capable of taking a connected state where the spool 5 and the motor 7 are connected (power transmission operation mode) and a disconnected state where the connected state is cancelled (power transmission disconnection mode). The power transmission mechanism 9 is sometimes referred to as so-called "clutch" which are composed of a combination of gears. The connected state of the power transmission mechanism 9 is a state where the power of the motor 7 is allowed to be transmitted to the spool via the power transmission mechanism 9. When the motor 7 is controlled to rotate in this connected state, the power of the motor 7 is transmitted to the spool 5 via the power transmission mechanism 9. During this, the rotational speed of the motor 7 is reduced by the power transmission mechanism 9. On the other hand, in the disconnected state of the power transmission mechanism 9, the physical connection between the spool 5 and the motor 7 is cancelled so as to allow the easy unwinding (withdrawing) of the seat belt 3 from the spool 5 manually. It should be noted that the spool 5 and the motor 7 may be directly connected without the power transmission mechanism 9 between the spool 5 and the motor 7, if required.

In this embodiment, the power transmission mechanism 9 is constructed as a so-called "single-stage clutch", but not illustrated. Accordingly, when the motor 7 is controlled to roate with a predetermined motor output in the power transmission operation mode of the power transmission mechanism 9, the rotation of the motor 7 is transmitted to the spool 5 with the rotational speed being reduced so that the spool 5 is driven to rotate with predetermined torque at predetermined rotational speed. Instead of the power transmission mechanism 9, a power transmission mechanism capable of changing the rotational torque and the rotational speed of the spool into several stages may be employed. For example, in case of a two-stage clutch capable of changing the rotational torque and the rotational speed of the spool into two stages, the power transmission mechanism can be set in a high-reduction ratio mode with relatively high rotational torque and relatively low rotational speed in order to respond to a need for winding of the seat belt onto the spool with large belt tension. On the other hand, the power transmission mechanism can be set in a low-reduction ratio mode with relatively low rotational torque and relatively high rotational speed in order to respond to a need for rapid winding of the seat belt onto the spool.

In this embodiment, the seat belt retractor 1 of this embodiment has the following seven seat belt control modes relating to the state of the seat belt 3. Based on these seat belt control modes, the control of the motor 7 and the power transmission mechanism 9 are performed by the ECU 20. Another seat belt control mode may be added to these seat belt control modes.

### (1) Belt storage mode

Belt storage mode is a control mode in which the seat belt 3 is not used and fully wound onto the spool 5. In the seat belt retractor 1 in the belt storage mode, the motor 7 is not activated and the power transmission mechanism 9 is set to the power transmission disconnection mode. Therefore, only very weak belt tension is applied to the seat belt 3 and the power consumption is zero.

### (2) Belt withdrawing mode

Belt withdrawing mode is a control mode in which the seat belt 3 is withdrawn from the spool 5 so as to be worn by the occupant. The seat belt retractor 1 in the belt withdrawing mode is also set in the power transmission disconnection mode. Therefore, the seat belt 3 can be withdrawn manually with small force. Also in this case, the motor 7 is not activated so that the power consumption is zero.

### (3) Belt winding and fitting mode

Belt winding and fitting mode is a control mode in which after the seat belt 3 is withdrawn and the tongue (the tongue 12 in Fig. 1) is inserted into and latched with the seat belt buckle to turn ON the buckle switch (the buckle switch 16a in Fig. 1), excessively withdrawn part of the seat belt 3 is wound in order to fit the seat belt 3 to the occupant and a control mode in which when the occupant moves so as to withdraw a predetermined amount of the seat belt 3 from the normally used state of the seat belt 3 (at this point, the buckle switch is in the ON state) and then the occupant returns to the original position, the withdrawn part of the seat belt 3 is wound. In the seat belt retractor 1 in the belt winding and fitting mode, the power transmission mechanism 9 is set to the power transmission operation mode and the motor 7 is controlled to rotate at high rotational speed in the belt winding direction. Therefore, the seat belt 3 is rapidly wound onto the spool 5 and then the motor 7 is stopped when very small predetermined belt tension is generated, whereby the seat belt 3 is worn by and fitted to the occupant.

### (4) Normal wearing mode (comfortable mode)

Normal wearing mode (comfortable mode) is a control mode in which the occupant wears the seat belt 3 in the normal state after the belt winding and fitting mode is terminated. In the seat belt retractor 1 in the normal wearing mode, the motor 7 is not activated and the power transmission mechanism 9 is set in the power transmission disconnection mode. Therefore, only very weak belt tension is applied to the seat belt 3 so that the vehicle occupant can wear the seat belt 3 without any stress. In addition, the power consumption is zero.

### (5) Warning mode

Warning mode is a control mode in which when the system detects dozing of the driver during running or detects an obstacle around the vehicle when the vehicle is running and the seat belt is in the normal wearing mode, the seat belt 3 is wound repeatedly predetermined times so as to warn the driver. In the seat belt retractor 1 in the warning mode, the motor 7 is controlled to be alternately activated and stopped several times. Therefore, the operation of applying relatively strong belt tension (which is weaker than that of the belt tension during the emergency mode as will be described later) and very weak belt tension onto the seat belt 3 is alternately repeated, thereby drawing the driver's attention to the dozing and the obstacle around the vehicle.

### (6) Emergency mode

Emergency mode is a control mode which is set when the vehicle extremely likely has a collision with an obstacle or the like during running in the normal wearing mode or following the aforementioned warning mode. In the seat belt retractor 1 in the emergency mode, the power transmission mechanism 9 is set in the power transmission operation mode and the motor 7 is controlled to rotate at high rotational speed with high rotational torque in the belt winding direction. Therefore, the motor 7 is stopped when predetermined extremely strong belt tension is generated on the seat belt 3 after the seat belt 3 is rapidly wound onto the spool 5, thereby securely restraining the vehicle occupant with the seat belt 3.

### (7) Belt winding and storing mode

Belt winding and storing mode is a control mode in which the seat belt 3 is fully wound to be in the storage state. In the seat belt retractor 1 in the belt winding and storing mode, the power transmission mechanism 9 is set to the power transmission operation mode and the motor 7 is controlled to rotate in the belt winding direction so as to wind up the seat belt onto the spool 5. Consequently, the action of winding up the withdrawn seat belt 3 onto the spool 5, that is, "seat belt storage winding action" is conducted, thereby preventing the seat belt 3 from being kept in the unwound state from the spool 5. Thus, the motor 7 is stopped when the seat belt 3 is fully wound and a predetermined belt tension which is very weak is developed, whereby the seat belt 3 becomes to the belt storage mode in which the aforementioned very weak belt tension is applied to the seat belt 3.

With regard to the belt winding and storing mode, the seat belt 3 may be caught in the vehicle occupant or the vehicle seat and the seat belt 3 may be withdrawn by the vehicle occupant when the belt storage winding mode is conducted. For this, this embodiment is adapted to repeat control of stopping (halting) the seat belt storage winding action for a predetermined time period from when the seat belt load is increased during the seat belt storage winding action to when the factor increasing the load is eliminated and, after that, restarting the seat belt storage winding action. That is, in this embodiment, when seat belt load is increased during the seat belt storage winding action, an interval is provided for stopping the seat belt storage winding action for a predetermined time period. The increase in seat belt load is determined by the ECU 20 based on the current value of the motor 7 detected by the motor current detector 22 shown in Fig. 2. Specifically, when the current value of the motor 7 exceeds the reference value during the seat belt storage winding action, it is determined that the seat belt 3 is caught in the vehicle occupant or the vehicle seat or that the seat belt is withdrawn by the vehicle occupant, that is, in the "increased load state".

The suitable value of the aforementioned interval varies between cases that the factor increasing the seat belt load is catch of the seat belt in the vehicle occupant or the vehicle seat and cases that the factor is the seat belt withdrawing operation by the vehicle occupant. That is, when the seat belt 3 is caught in the vehicle occupant or the vehicle seat, not much time is required to release the seat belt from being caught. In fact, if the seat belt storage winding action is stopped for a time longer than necessary, there is a possibility that the seat belt 3 or the tongue 12 is jammed in the vehicle door. On the other hand, when the seat belt 3 is withdrawn by the vehicle occupant, longer time is required for the seat belt withdrawing operation by the vehicle occupant. Therefore, if the seat belt storage winding action is stopped only for a short time period, the seat belt storage winding action is conducted against the seat belt withdrawing operation. That is, there is a problem that the vehicle occupant feels uncomfortable.

Accordingly, this embodiment is adapted to temporarily stop the seat belt storage winding action by stopping of the driving of the motor 7 according to the increase of the seat belt load when the seat belt retractor is in the belt winding and storing mode and to set the time interval of stoppage to suitable time commensurate with the factor of increasing the seat belt load. Hereinafter, the control will be described in detail with reference to Fig. 3 through Fig. 5.

Retractor control process A
Fig. 3 shows a flow chart for the "retractor control process A" of this embodiment. In the retractor control process A shown in Fig. 3, in step S 10, it is determined whether or not the seat belt buckle is changed from the ON state to the OFF state. Specifically, when the release of insertion of the tongue 12 relative to the seat belt buckle 16 shown in Fig. 1 is detected by the buckle switch 16a, it is determined that the seat belt buckle is changed from the ON state to the OFF state, that is, that the seat belt 3 is changed from the worn state to the released state relative to the vehicle occupant. This determination is achieved by the ECU 20 which detects the information from the buckle switch 16a. The change of the seat belt 3 from the worn state to the released state relative to the vehicle occupant means that the starting condition for seat belt storage is satisfied. In the step S10, the process continues until the seat belt buckle is changed from the ON state to the OFF state and proceeds to step S11 when it is determined that the seat belt buckle is changed from the ON state to the OFF state (YES in step S10).

In step S11, it is determined whether or not the vehicle door (the vehicle door 50 shown in Fig. 1) is in the open state. Specifically, based on the information detected by the vehicle door sensor 52 shown in Fig. 1, it is determined that the vehicle door 50 is in the open state when the vehicle door sensor is OFF. This determination is achieved by the ECU 20 which detects the information from the vehicle door sensor 52. In the step 11, when it is determined that the vehicle door 50 is in the open state (YES in step S11) so that "first satisfaction pattern of the start of the seat belt storage" is established, the process proceeds to step S12. If not, i.e. when it is determined that the vehicle door 50 is in the closed state (No in step S11) so that "second satisfaction pattern of the start of the seat belt storage" is established, the process proceeds to step S13.

In step S12 and step S 13, the power transmission mechanism 9 of the seat belt retractor 1 is set to the power transmission operation mode and the motor 7 is controlled to rotate the spool 5 to wind up the seat belt, thereby performing the seat belt storage winding action mentioned above. When it is determined that the seat belt load is increased because the value detected by the motor current detector 22 exceeds the reference current value during the seat belt storage winding action, an interval is provided for temporarily stopping the seat belt storage winding action for a predetermined time period.

Particularly in step S12, the seat belt storage winding action is conducted with such a setting mode that the interval for the temporal stoppage is set to be shorter than that of step S13 (seat belt storage winding action with shorter interval). As the stoppage time period (interval) in step S12 is assumed as T1 and the stoppage time period (interval) in step S 13 as will be described later is assumed as T2, the relationship T1 < T2 is established. The stoppage time period T1 here used corresponds to "first time period" in claim 2 and claim 6 and the stoppage time period T2 corresponds to "second time period longer than the first time period" in claim 2 and claim 6. Therefore, the seat belt storage winding action and the winding stopping action are alternately conducted until the condition for termination of the seat belt storage winding action is satisfied in step S 14 as will be described later. It is preferable that the stoppage time periods T1 and T2 are previously set based on actual measurement of times required for conducting operations by the vehicle occupant for releasing the seat belt from being caught and for withdrawing the seat belt.

The setting in step S12 is based on the ideas that when the vehicle door 50 is in the open state in step S11, there is less possibility that the factor increasing the seat belt load is the operation of withdrawing the seat belt 3 by the vehicle occupant and there is high possibility that the factor is the catch of the seat belt 3 in the vehicle occupant or the vehicle seat so that not much time is required to release the seat belt from being caught. Therefore, it can prevent the seat belt storage winding action from being stopped for a time longer than necessary, thereby preventing the occurrence of jamming of the seat belt 3 or the tongue in the vehicle door 50.

On the other hand, in step S 13, the seat belt storage winding action is conducted with such a setting mode that the interval for the temporal stoppage is set to be longer than that of step S12 (seat belt storage winding action with longer interval). Therefore, the seat belt storage winding action and the winding stopping action are alternately conducted until the condition for termination of the seat belt storage winding action is satisfied in step S 15 as will be described later.

The setting in step S13 is based on the ideas that when the vehicle door 50 is in the closed state in step S11, there is high possibility that the factor increasing the seat belt load is the operation of withdrawing the seat belt 3 by the vehicle occupant so that longer time is required for the withdrawing operation. Therefore, it can prevent the seat belt storage winding action from being conducted against the seat belt withdrawing operation, thereby preventing the vehicle occupant from feeling uncomfortable.

In step S 14, it is determined whether or not the condition for termination of the seat belt storage winding action is satisfied in step S12. When it is determined that the condition is not satisfied (NO in step S 14), the process returns to step S12. When it is determined that the condition is satisfied (YES in step S 14), the retractor control process A is terminated. Similarly, in step S 15, it is determined whether or not the condition for termination of the seat belt storage winding action is satisfied in step S13. When it is determined that the condition is not satisfied (NO in step S15), the process returns to step S 13. When it is determined that the condition is satisfied (YES in step S 15), the retractor control process A is terminated. Satisfaction of termination condition in step S 14 or step S15 is judged based on the time from when the seat belt buckle becomes OFF state and the number of repeats of the seat belt storage winding action and the winding stopping action in step S12 or step S13.
The aforementioned retractor control process A corresponds to the control aspect by the control means in claim 2 and claim 6.

(Retractor control process B)

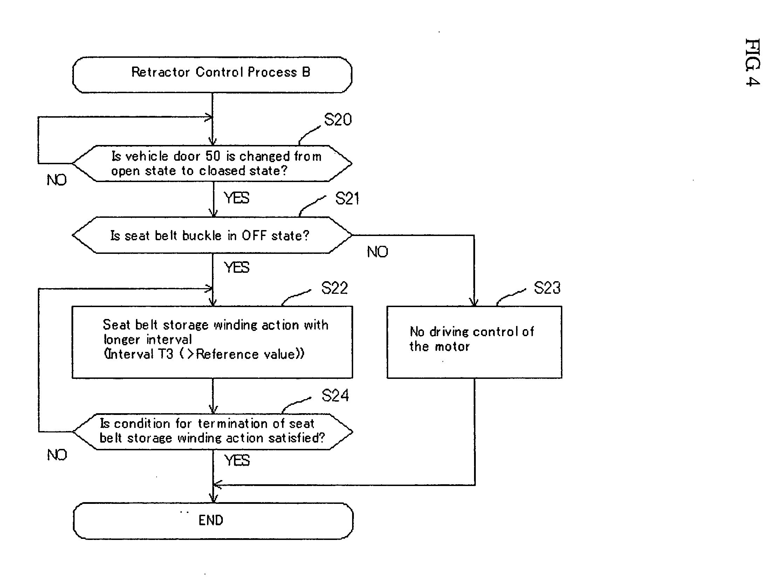

Fig. 4 shows a flow chart for the "retractor control process B" of this embodiment. In the retractor control process B shown in Fig. 4, in step S20, it is determined whether or not the vehicle door (vehicle door 50 in Fig. 1) is changed from the open state to the closed state. Specifically, when, based on the information detected by the vehicle door sensor 52 as shown in Fig. 1, the sensor is changed from the OFF state to the ON state, it is determined that the vehicle door 50 is changed from the open state to the closed state. This determination is achieved by the ECU 20 which detects the information from the vehicle door sensor 52. In the step S20, the process continues until the vehicle door 50 is changed from the open state to the closed state and proceeds to step S21 when it is determined that the vehicle door 50 is changed from the open state to the closed state (YES in step S20).

In step S21, it is determined whether or not the seat belt buckle is in the OFF state. Specifically, when the release of insertion of the tongue 12 relative to the seat belt buckle 16 shown in Fig. 1 is detected by the buckle switch 16a, it is determined that the seat belt buckle is in the OFF state, that is, that the seat belt 3 is not worn by the vehicle occupant. This determination is achieved by the ECU 20 which detects the information from the buckle switch 16a. In step S21, when it is determined that the seat belt buckle is in the OFF state (YES in step S21), it is determined that the starting condition for seat belt storage is satisfied, that is, the "satisfaction pattern of the start of the seat belt storage" is established so that the process proceeds to step S22. If not, i.e. when it is determined that the seat belt buckle is in the ON state (NO in step S21), the process proceeds to step S23.

In step S22, the power transmission mechanism 9 of the seat belt retractor 1 is set to the power transmission operation mode and the motor 7 is controlled to rotate the spool 5 to wind up the seat belt, thereby performing the seat belt storage winding action mentioned above. When it is determined that the seat belt load is increased because the value detected by the motor current detector 22 reaches the reference current value during the seat belt storage winding action, an interval is provided for temporarily stopping the seat belt storage winding action for a predetermined time period. In step S22, the seat belt storage winding action is conducted with such a setting mode that the temporal stoppage time period T3 is set to be longer than a preset reference stoppage time period (reference value) T0 (T3 > T0) (seat belt storage winding action with longer interval). The reference stoppage time period T0 corresponds to "reference stoppage time period" in claim 3 and claim 7. Therefore, the seat belt storage winding action and the winding stopping action are alternately conducted until the condition for termination of the seat belt storage winding action is satisfied in step S24 as will be described later. It is preferable that the stoppage time period T3 and the reference value are previously set based on actual measurement of times required for conducting operations by the vehicle occupant for releasing the seat belt from being caught and for withdrawing the seat belt.

The setting in step S22 is based on the ideas that when the vehicle door 50 is in the closed state, there is high possibility that the factor increasing the seat belt load is the operation of withdrawing the seat belt 3 by the vehicle occupant so that longer time is required for the withdrawing operation. Therefore, it can prevent the seat belt storage winding action from being conducted against the seat belt withdrawing operation, thereby preventing the vehicle occupant from feeling uncomfortable.

On the other hand, in step S23, the motor 7 is set to be into the stopped state or is kept in the stopped state so as not to conduct the seat belt storage winding action because the seat buckle is in the ON state. During this, the power transmission mechanism 9 of the seat belt retractor 1 may be set in the power transmission operation mode or the power transmission disconnection mode. In the step S23, the setting of the temporal stoppage time period is not conducted because the seat belt storage winding action is not conducted.

In step S24, similarly to step S 14 and step S 15 shown in Fig. 3, it is determined whether or not the condition for termination of the seat belt storage winding action is satisfied. When it is determined that the condition is not satisfied (NO in step S24), the process returns to step S22. When it is determined that the condition is satisfied (YES in step S24), the retractor control process B is terminated. Satisfaction of termination condition in step S24 is judged based on the time from when the seat belt buckle becomes OFF state and the number of repeats of the seat belt storage winding action and the winding stopping action in step S22.
The aforementioned retractor control process B corresponds to the control aspect by the control means in claim 3 and claim 7.

(Retractor control process C)

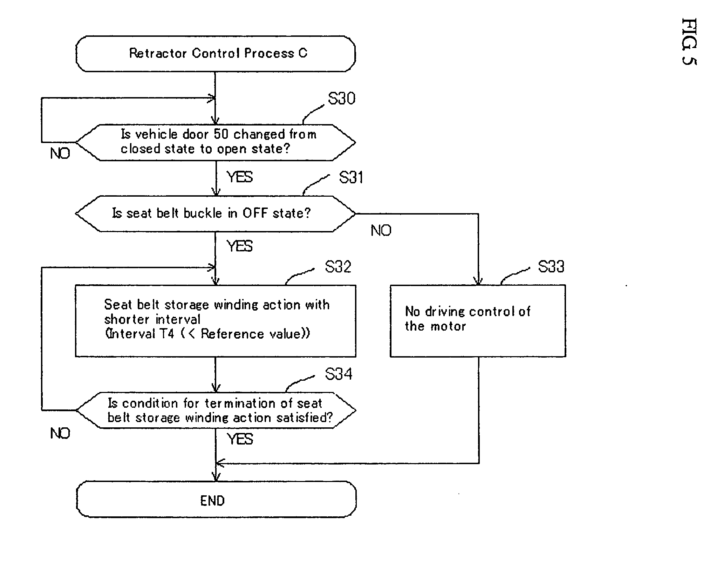

Fig. 5 shows a flow chart for the "retractor control process C" of this embodiment. In the retractor control process C shown in Fig. 5, in step S30, it is determined whether or not the vehicle door (vehicle door 50 in Fig. 1) is changed from the closed state to the open state. Specifically, when, based on the information detected by the vehicle door sensor 52 as shown in Fig. 1, the sensor is changed from the OFF state to the ON state, it is determined that the vehicle door 50 is changed from the closed state to the open state. This determination is achieved by the ECU 20 which detects the information from the vehicle door sensor 52. In the step S30, the process continues until the vehicle door 50 is changed from the closed state to the open state and proceeds to step S31 when it is determined that the vehicle door 50 is changed from the closed state to the open state (YES in step S30).

In step S31, it is determined whether or not the seat belt buckle is in the OFF state. Specifically, when the release of insertion of the tongue 12 relative to the seat belt buckle 16 shown in Fig. 1 is detected by the buckle switch 16a, it is determined that the seat belt buckle is in the OFF state, that is, that the seat belt 3 is not worn by the vehicle occupant. This determination is achieved by the ECU 20 which detects the information from the buckle switch 16a. In step S31, when it is determined that the seat belt buckle is in the OFF state (YES in step S31), it is determined that the starting condition for seat belt storage is satisfied, that is, the "satisfaction pattern of the start of the seat belt storage" is established so that the process proceeds to step S32. If not, i.e. when it is determined that the seat belt buckle is in the ON state (NO in step S31), the process proceeds to step S33.

In step S32, the power transmission mechanism 9 of the seat belt retractor 1 is set to the power transmission operation mode and the motor 7 is controlled to rotate the spool 5 to wind up the seat belt, thereby performing the seat belt storage winding action mentioned above. When it is determined that the seat belt load is increased because the value detected by the motor current detector 22 reaches the reference current value during the seat belt storage winding action, an interval is provided for temporarily stopping the seat belt storage winding action for a predetermined time period. In step S32, the seat belt storage winding action is conducted with such a setting mode that the temporal stoppage time period T4 is set to be shorter than a preset reference stoppage time period (reference value) T0 (T4 < T0) (seat belt storage winding action with shorter interval). The reference stoppage time period T0 corresponds to "reference stoppage time period" in claim 4 and claim 8. Therefore, the seat belt storage winding action and the winding stopping action are alternately conducted until the condition for termination of the seat belt storage winding action is satisfied in step S34 as will be described later. It is preferable that the stoppage time period T4 and the reference value are previously set based on actual measurement of times required for conducting operations by the vehicle occupant for releasing the seat belt from being caught and for withdrawing the seat belt.

The setting in step S32 is based on the ideas that when the vehicle door 50 is in the open state, there is less possibility that the factor increasing the seat belt load is the operation of withdrawing the seat belt 3 by the vehicle occupant and there is high possibility that the factor is the catch of the seat belt 3 in the vehicle occupant or the vehicle seat so that not much time is required to release the seat belt from being caught. Therefore, it can prevent the seat belt storage winding action from being stopped for a time longer than necessary, thereby preventing the occurrence of jamming of the seat belt 3 or the tongue in the vehicle door 50.

On the other hand, in step S33, the motor 7 is set to be into the stopped state or is kept in the stopped state so as not to conduct the seat belt storage winding action because the seat belt buckle is in the ON state. During this, the power transmission mechanism 9 of the seat belt retractor 1 may be set in the power transmission operation mode or the power transmission disconnection mode. In the step S33, the setting of the temporal stoppage time period is not conducted because the seat belt storage winding action is not conducted.

In step S34, similarly to step S14 and step S15 shown in Fig. 3, it is determined whether or not the condition for termination of the seat belt storage winding action is satisfied. When it is determined that the condition is not satisfied (NO in step S34), the process returns to step S32. When it is determined that the condition is satisfied (YES in step S34), the retractor control process C is terminated. Satisfaction of termination condition in step S34 is judged based on the time from when the seat belt buckle becomes OFF state and the number of repeats of the seat belt storage winding action and the winding stopping action in step S32.
The aforementioned retractor control process C corresponds to the control aspect by the control means in claim 4 and claim 8.

As mentioned above, according to the retractor control process A, the retractor control process B, or the retractor control process C, the seat belt storage winding action is temporarily stopped according to the increase in the seat belt load during the seat belt storage winding action and the time period for the stoppage is suitably set to a proper time period commensurate with the factor increasing the seat belt load, thereby streamlining the seat belt storage winding action.
Therefore, according to this embodiment, the present invention provides the seat belt retractor 1, the seat belt apparatus 100, and the vehicle with the seat belt apparatus 100 in which the seat belt storage winding action using the motor 7 is streamlined.

With reference to the aforementioned respective retractor control processes, the seat belt storage winding action by the spool may be conducted only by the driving force of the motor 7 or by the winding force of an elastic member such as a return spring acting on the spool 5 and the driving force of the motor 7 as secondary force.

In the present invention, the aforementioned retractor control processes A through C may be employed independently. Alternatively, any suitable combination thereof may be employed.

In this embodiment, when the starting condition for seat belt storage which is defined by information about the state of the seat belt 3 relative to the vehicle occupant C and information about the state of the vehicle door 50 corresponding to the seat belt 3 is satisfied, the motor 7 is controlled to wind up the seat belt onto the spool 5 and the temporal stoppage time period is variably set according to the satisfaction pattern of the starting condition. That is, the start of seat belt storage winding action is defined by the combination of the state of the seat belt 3 (the worn state or the wearing-cancelled state) and the state of the vehicle door 50 (the open state or the closed state) and the stoppage time period is varied according to the satisfaction pattern of the starting condition for the seat belt storage winding action. Satisfaction patterns of the starting condition for the seat belt storage winding action may be suitably set according to the combination of the state of the seat belt 3 and the state of the vehicle door 50 and the satisfying order. The number of the satisfaction patterns can be set according to need.

The present invention is not limited to the aforementioned embodiments, so various variations and modifications may be made. For example, the following embodiments as variations of the aforementioned embodiments may be carried out.

The above embodiments have been described with regard to the seat belt retractor 1 to be installed in an automobile, the seat belt retractor of the present invention can be adapted to seat belt apparatuses to be installed in a vehicle for transfer of occupant(s) such as automobile, aircraft, boat, train, and bus.

## Claims

1. A seat belt retractor to be installed in a vehicle comprising:
an electric motor (7); a spool (5) which is capable of winding and unwinding a seat belt (3) for occupant restraint in association with driving of said electric motor; and a control means (20) which controls the driving of said electric motor, wherein
seat belt storage starting condition is defined by information about the state of said seat belt relative to a vehicle occupant, i.e. whether or not the seat belt is worn, and information about the state of a vehicle door (50) corresponding to said seat belt, i.e. whether or not the door is open, wherein when said seat belt storage starting condition is satisfied, said control means controls the driving of said electric motor to rotate said spool to wind up the seat belt and, in cases where seat belt load acting on the seat belt is increased during the driving control, the driving control is temporarily stopped and the stoppage time period is set according to a satisfaction pattern of the seat belt storage starting condition; whereby the satisfaction pattern of the starting condition is set according to the combination of the state of the seat belt and the state of the vehicle door and the satisfying order.

2. A seat belt retractor as claimed in claim 1, wherein
in case of a first satisfaction pattern of the seat belt storage starting condition where the vehicle door corresponding to said seat belt is in the open state when the wearing of said seat belt relative to the vehicle occupant is cancelled, said control means controls the driving of said electric motor to rotate said spool to wind up the seat belt and sets the stoppage time period of said electric motor to a first stoppage time period (T1), while in case of a second satisfaction pattern of the seat belt storage starting condition where the vehicle door corresponding to said seat belt is in the closed state when the wearing of said seat belt relative to the vehicle occupant is cancelled, said control means controls the driving of said electric motor to rotate said spool to wind up the seat belt and sets the stoppage time period of said electric motor to a second time period (T2) longer than the first time period.

3. A seat belt retractor as claimed in claim 1 or 2, wherein
in case of a satisfaction pattern of the seat belt storage starting condition where the wearing of said seat belt relative to the vehicle occupant is cancelled when the vehicle door corresponding to the seat belt is closed, said control means sets said stoppage time period of said electric motor to be longer than a reference stoppage time period (T0).

4. A seat belt retractor as claimed in claim 1, 2 or 3, wherein
in case of a satisfaction pattern of the seat belt storage starting condition where the wearing of said seat belt relative to the vehicle occupant is cancelled when the vehicle door corresponding to the seat belt is opened, said control means sets said stoppage time period of said electric motor to be shorter than a reference stoppage time period (T0).

5. A seat belt apparatus to be installed in a vehicle comprising:
a seat belt (3) for occupant restraint which can be worn by a vehicle occupant; a seat belt retractor as claimed in claim 1; buckle (16) fixed to the vehicle; a tongue (12) which is attached to said seat belt and is latched to said seat belt buckle when said seat belt is worn, a buckle detection sensor (16a) for detecting that said tongue is latched to said seat belt buckle, and a current detection sensor (22) for detecting the current value of said electric motor, wherein
said control means determines whether or not the seat belt is worn by the vehicle occupant based on the information detected by said buckle detection sensor, and seat belt storage starting condition is defined by information about the state of said seat belt relative to a vehicle occupant, i.e. whether or not the seat belt is worn, and information about the state of a vehicle door corresponding to said seat belt, i.e. whether or not the door is open, wherein when said seat belt storage starting condition is satisfied, said control means controls the driving of said electric motor to rotate said spool to wind up the seat belt and, when during this driving control, it is determined that the seat belt load acting on said seat belt is increased based on the information detected by the said current detection sensor, said control means temporarily stops said driving control and sets the stoppage time period according to a satisfaction pattern of the seat belt storage starting condition.

6. A seat belt apparatus as claimed in claim 5, wherein
in case of a first satisfaction pattern of the seat belt storage starting condition where the vehicle door corresponding to said seat belt is in the open state when the wearing of said seat belt relative to the vehicle occupant is cancelled, said control means controls the driving of said electric motor to rotate said spool to wind up the seat belt and sets the stoppage time period of said electric motor to a first stoppage time period (T1), while in case of a second satisfaction pattern of the seat belt storage starting condition where the vehicle door corresponding to said seat belt is in the closed state when the wearing of said seat belt relative to the vehicle occupant is cancelled, said control means controls the driving of said electric motor to rotate said spool to wind up the seat belt and sets the stoppage time period of said electric motor to a second time period (T2) longer than the first time period.

7. A seat belt apparatus as claimed in claim 5 or 6, wherein
in case of a satisfaction pattern of the seat belt storage starting condition where the wearing of the seat belt relative to the vehicle occupant is cancelled when the vehicle door corresponding to said seat belt is closed, said control means sets the stoppage time period of said electric motor to be longer than a reference stoppage time (T0).

8. A seat belt apparatus as claimed in claim 5, 6 or 7, wherein
in case of a satisfaction pattern of the seat belt storage starting condition where the wearing of the seat belt relative to the vehicle occupant is cancelled when the vehicle door corresponding to said seat belt is opened, the control means sets the stoppage time period of said electric motor to be shorter than a reference stoppage time (T0).

9. A vehicle with a seat belt apparatus comprising a seat belt apparatus as claimed in any one of claims 5 through 8, wherein
said seat belt apparatus is accommodated in an accommodating space in the vehicle.

## Patentansprüche

1. Sicherheitsgurtaufroller zum Einbau in ein Fahrzeug mit:
einem Elektromotor (7), einer Spule (5), die einen Sicherheitsgurt (3) zur Insassenrückhaltung durch den Antrieb des Elektromotors auf- und abwickeln kann, und einer Steuereinrichtung (20), die das Antreiben des Elektromotors steuert, wobei
eine Sicherheitsgurt-Aufnahmestartbedingung durch Informationen über den Zustand des Sicherheitsgurts relativ zu einem Fahrzeuginsassen, d. h. ob der Sicherheitsgurt angelegt ist, und Informationen über den Zustand einer dem Sicherheitsgurt entsprechenden Fahrzeugtür (50), d. h. ob die Tür offen ist, festgelegt ist, wobei bei Erfüllung der Sicherheitsgurt-Aufnahmestartbedingung die Steuereinrichtung das Antreiben des Elektromotors steuert, um die Spule zu drehen und den Sicherheitsgurt aufzuwickeln, und in Fällen, in denen auf den Sicherheitsgurt wirkende Sicherheitsgurtlast während der Antriebssteuerung steigt, die Antriebssteuerung vorübergehend gestoppt wird und die Stoppzeitspanne gemäß einem Erfüllungsmuster der Sicherheitsgurt-Aufnahmestartbedingung eingestellt wird, wodurch das Erfüllungsmuster der Startbedingung gemäß der Kombination des Zustands des Sicherheitsgurts und des Zustands der Fahrzeugtür und der Erfüllungsreihenfolge eingestellt wird.

2. Sicherheitsgurtaufroller nach Anspruch 1, wobei
im Fall eines ersten Erfüllungsmusters der Sicherheitsgurt-Aufnahmestartbedingung, in dem sich die dem Sicherheitsgurt entsprechende Fahrzeugtür im offenen Zustand befindet, wenn das Anlegen des Sicherheitsgurts relativ zum Fahrzeuginsassen aufgehoben ist, die Steuereinrichtung das Antreiben des Elektromotors steuert, um die Spule zu drehen und den Sicherheitsgurt aufzuwickeln, und die Stoppzeitspanne des Elektromotors auf eine erste Stoppzeitspanne (T1) einstellt, während im Fall eines zweiten Erfüllungsmusters der Sicherheitsgurt-Aufnahmestartbedingung, in dem sich die dem Sicherheitsgurt entsprechende Fahrzeugtür im geschlossenen Zustand befindet, wenn das Anlegen des Sicherheitsgurts relativ zum Fahrzeuginsassen aufgehoben ist, die Steuereinrichtung das Antreiben des Elektromotors steuert, um die Spule zu drehen und den Sicherheitsgurt aufzuwickeln, und die Stoppzeitspanne des Elektromotors auf eine zweite Zeitspanne (T2) einstellt, die länger als die erste Zeitspanne ist.

3. Sicherheitsgurtaufroller nach Anspruch 1 oder 2, wobei
im Fall eines Erfüllungsmusters der Sicherheitsgurt-Aufnahmestartbedingung, in dem das Anlegen des Sicherheitsgurts relativ zum Fahrzeuginsassen aufgehoben ist, wenn die dem Sicherheitsgurt entsprechende Fahrzeugtür geschlossen ist, die Steuereinrichtung die Stoppzeitspanne des Elektromotors so einstellt, daß sie länger als eine Referenzstoppzeitspanne (T0) ist.

4. Sicherheitsgurtaufroller nach Anspruch 1, 2 oder 3, wobei
im Fall eines Erfüllungsmusters der Sicherheitsgurt-Aufnahmestartbedingung, in dem das Anlegen des Sicherheitsgurts relativ zum Fahrzeuginsassen aufgehoben ist, wenn die dem Sicherheitsgurt entsprechende Fahrzeugtür geöffnet ist, die Steuereinrichtung die Stoppzeitspanne des Elektromotors so einstellt, daß sie kürzer als eine Referenzstoppzeitspanne (T0) ist.

5. Sicherheitsgurtvorrichtung zum Einbau in ein Fahrzeug mit:
einem Sicherheitsgurt (3) zur Insassenrückhaltung, der durch einen Fahrzeuginsassen angelegt sein kann, einem Sicherheitsgurtaufroller nach Anspruch 1, einem Sicherheitsgurtschloß (16), das am Fahrzeug befestigt ist, einer Zunge (12), die am Sicherheitsgurt angebracht ist und am Sicherheitsgurtschloß verriegelt ist, wenn der Sicherheitsgurt angelegt ist, einem Schloßdetektionssensor (16a) zum Detektieren, daß die Zunge am Sicherheitsgurtschloß verriegelt ist, und einem Stromdetektionssensor (22) zum Detektieren des Stromwerts des Elektromotors, wobei
die Steuereinrichtung auf der Grundlage der durch den Gurtschloßsensor detektierten Informationen bestimmt, ob der Sicherheitsgurt durch den Fahrzeuginsassen angelegt ist, und die Sicherheitsgurt-Aufnahmestartbedingung durch Informationen über den Zustand des Sicherheitsgurts relativ zu einem Fahrzeuginsassen, d. h. ob der Sicherheitsgurt angelegt ist, und Informationen über den Zustand einer dem Sicherheitsgurt entsprechenden Fahrzeugtür, d. h. ob die Tür offen ist, festgelegt ist, wobei bei Erfüllung der Sicherheitsgurt-Aufnahmestartbedingung die Steuereinrichtung das Antreiben des Elektromotors steuert, um die Spule zu drehen und den Sicherheitsgurt aufzuwickeln, und bei Bestimmung während dieser Antriebssteuerung auf der Grundlage der durch den Stromdetektionssensor detektierten Informationen, daß die auf den Sicherheitsgurt wirkende Sicherheitsgurtlast steigt, die Steuereinrichtung die Antriebssteuerung vorübergehend stoppt und die Stoppzeitspanne gemäß einem Erfüllungsmuster der Sicherheitsgurt-Aufnahmestartbedingung einstellt.

6. Sicherheitsgurtvorrichtung nach Anspruch 5, wobei
im Fall eines ersten Erfüllungsmusters der Sicherheitsgurt-Aufnahmestartbedingung, in dem sich die dem Sicherheitsgurt entsprechende Fahrzeugtür im offenen Zustand befindet, wenn das Anlegen des Sicherheitsgurts relativ zum Fahrzeuginsassen aufgehoben ist, die Steuereinrichtung das Antreiben des Elektromotors steuert, um die Spule zu drehen und den Sicherheitsgurt aufzuwickeln, und die Stoppzeitspanne des Elektromotors auf eine erste Stoppzeitspanne (T1) einstellt, während im Fall eines zweiten Erfüllungsmusters der Sicherheitsgurt-Aufnahmestartbedingung, in dem sich die dem Sicherheitsgurt entsprechende Fahrzeugtür im geschlossenen Zustand befindet, wenn das Anlegen des Sicherheitsgurts relativ zum Fahrzeuginsassen aufgehoben ist, die Steuereinrichtung das Antreiben des Elektromotors steuert, um die Spule zu drehen und den Sicherheitsgurt aufzuwickeln, und die Stoppzeitspanne des Elektromotors auf eine zweite Zeitspanne (T2) einstellt, die länger als die erste Zeitspanne ist.

7. Sicherheitsgurtvorrichtung nach Anspruch 5 oder 6, wobei im Fall eines Erfüllungsmusters der Sicherheitsgurt-Aufnahmestartbedingung, in dem das Anlegen des Sicherheitsgurts relativ zum Fahrzeuginsassen aufgehoben ist, wenn die dem Sicherheitsgurt entsprechende Fahrzeugtür geschlossen ist, die Steuereinrichtung die Stoppzeitspanne des Elektromotors so einstellt, daß sie länger als eine Referenzstoppzeit (T0) ist.

8. Sicherheitsgurtvorrichtung nach Anspruch 5, 6 oder 7, wobei
im Fall eines Erfüllungsmusters der Sicherheitsgurt-Aufnahmestartbedingung, in dem das Anlegen des Sicherheitsgurts relativ zum Fahrzeuginsassen aufgehoben ist, wenn die dem Sicherheitsgurt entsprechende Fahrzeugtür geöffnet ist, die Steuereinrichtung die Stoppzeitspanne des Elektromotors so einstellt, daß sie kürzer als eine Referenzstoppzeit (T0) ist.

9. Fahrzeug mit einer Sicherheitsgurtvorrichtung, die eine Sicherheitsgurtvorrichtung nach einem der Ansprüche 5 bis 8 aufweist, wobei
die Sicherheitsgurtvorrichtung in einem Unterbringungsraum im Fahrzeug untergebracht ist.

## Revendications

1. Enrouleur de ceinture de sécurité à poser dans un véhicule, comprenant :
un moteur électrique (7) ; une bobine (5) apte à enrouler et à dérouler une ceinture de sécurité (3) pour retenir un passager en association avec l'entraînement dudit moteur électrique ; et un moyen de commande (20) qui commande l'entraînement dudit moteur électrique, dans lequel
une condition d'initiation de rangement de ceinture de sécurité est définie par des informations concernant l'état de ladite ceinture de sécurité par rapport à un passager de véhicule, à savoir si la ceinture de sécurité est portée ou non, et par des informations concernant l'état d'une portière (50) de véhicule correspondant à ladite ceinture de sécurité, à savoir si la portière est ouverte ou non, dans lequel quand ladite condition d'initiation de rangement de ceinture de sécurité est satisfaite, ledit moyen de commande commande l'entraînement dudit moteur électrique pour entraîner en rotation ladite bobine pour enrouler la ceinture de sécurité et, dans des cas où la charge de la ceinture de sécurité agissant sur la ceinture de sécurité est accrue pendant la commande d'entraînement, la commande d'entraînement est provisoirement interrompue et le temps d'arrêt est défini en fonction d'un modèle de satisfaction de ladite condition d'initiation de rangement de ceinture de sécurité ; moyennant quoi le modèle de satisfaction de la condition d'initiation est défini en fonction de la combinaison de l'état de la ceinture de sécurité et de l'état de la portière de véhicule, ainsi que de l'ordre de satisfaction.

2. Enrouleur de ceinture de sécurité selon la revendication 1, dans lequel
au cas où un premier modèle de satisfaction de la condition d'initiation de rangement de ceinture de sécurité est vérifié, selon lequel la portière de véhicule correspondant à ladite ceinture de sécurité est dans l'état ouvert quand le port de ladite ceinture de sécurité par rapport au passager de véhicule est annulé, ledit moyen de commande commande l'entraînement dudit moteur électrique pour entraîner en rotation ladite bobine afin d'enrouler la ceinture de sécurité et il définit le temps d'arrêt dudit moteur électrique comme un premier temps d'arrêt (T1), tandis qu'au cas où un second modèle de satisfaction de la condition d'initiation de rangement de ceinture de sécurité est vérifié, selon lequel la portière de véhicule correspondant à ladite ceinture de sécurité est dans l'état fermé quand le port de ladite ceinture de sécurité par rapport au passager de véhicule est annulé, ledit moyen de commande commande l'entraînement dudit moteur électrique pour entraîner en rotation ladite bobine afin d'enrouler la ceinture de sécurité et il définit le temps d'arrêt dudit moteur électrique comme un second temps d'arrêt (T2) supérieur au premier temps.

3. Enrouleur de ceinture de sécurité selon la revendication 1 ou 2, dans lequel au cas où un modèle de satisfaction de la condition d'initiation de rangement de ceinture de sécurité est vérifié, selon lequel le port de ladite ceinture de sécurité par rapport au passager de véhicule est annulé quand la portière de véhicule correspondant à la ceinture de sécurité est fermée, ledit moyen de commande définit ledit temps d'arrêt dudit moteur électrique de sorte à ce qu'il soit supérieur à un temps d'arrêt de référence (T0).

4. Enrouleur de ceinture de sécurité selon la revendication 1, 2 ou 3, dans lequel au cas où un modèle de satisfaction de la condition d'initiation de rangement de ceinture de sécurité est vérifié, selon lequel le port de ladite ceinture de sécurité par rapport au passager de véhicule est annulé quand la portière de véhicule correspondant à la ceinture de sécurité est ouverte, ledit moyen de commande définit ledit temps d'arrêt dudit moteur électrique de sorte à ce qu'il soit inférieur à un temps d'arrêt de référence (T0).

5. Dispositif de ceinture de sécurité à poser dans un véhicule, comprenant :
une ceinture de sécurité (3) pour la retenue d'un passager, qui peut être portée par un passager de véhicule ; un enrouleur de ceinture de sécurité selon la revendication 1 ; une boucle (16) de ceinture de sécurité fixée au véhicule ; une languette (12) qui est fixée à ladite ceinture de sécurité et qui est verrouillée sur ladite boucle quand ladite ceinture de sécurité est portée, un capteur de détection de boucle (16a) pour détecter si ladite languette est verrouillée sur ladite boucle de ceinture de sécurité, et un capteur de détection de courant (22) pour détecter la valeur du courant dudit moteur électrique, dans lequel
ledit moyen de commande décide si la ceinture de sécurité est portée ou non par le passager de véhicule sur la base des informations détectées par ledit capteur de détection de boucle, et la condition d'initiation de rangement de ceinture de sécurité est définie par des informations concernant l'état de ladite ceinture de sécurité par rapport à un passager de véhicule, à savoir si la ceinture de sécurité est portée ou non, et par des informations concernant l'état d'une portière de véhicule correspondant à ladite ceinture de sécurité, à savoir si la portière est ouverte ou non, dans lequel quand ladite condition d'initiation de rangement de ceinture de sécurité est satisfaite, ledit moyen de commande commande l'entraînement dudit moteur électrique pour entraîner en rotation ladite bobine pour enrouler la ceinture de sécurité et, au cours de cette commande d'entraînement, lorsqu'il est déterminé sur la base des informations détectées par ledit capteur de détection de courant, que la charge de ceinture de sécurité agissant sur ladite ceinture de sécurité est accrue, ledit moyen de commande suspend provisoirement ladite commande d'entraînement et définit le temps d'arrêt en fonction d'un modèle de satisfaction de la condition d'initiation de rangement de ceinture de sécurité.

6. Dispositif de ceinture de sécurité selon la revendication 5, dans lequel au cas où un premier modèle de satisfaction de la condition d'initiation de rangement de ceinture de sécurité est vérifié, selon lequel la portière de véhicule correspondant à ladite ceinture de sécurité est dans l'état ouvert quand le port de ladite ceinture de sécurité par rapport au passager de véhicule est annulé, ledit moyen de commande commande l'entraînement dudit moteur électrique pour entraîner en rotation ladite bobine afin d'enrouler la ceinture de sécurité et il définit le temps d'arrêt dudit moteur électrique comme un premier temps d'arrêt (T1), tandis qu'au cas où un second modèle de satisfaction de la condition d'initiation de rangement de ceinture de sécurité est vérifié, selon lequel la portière de véhicule correspondant à ladite ceinture de sécurité est dans l'état fermé quand le port de ladite ceinture de sécurité par rapport au passager de véhicule est annulé, ledit moyen de commande commande l'entraînement dudit moteur électrique pour entraîner en rotation ladite bobine afin d'enrouler la ceinture de sécurité et il définit le temps d'arrêt dudit moteur électrique comme un second temps d'arrêt (T2) supérieur au premier temps.

7. Dispositif de ceinture de sécurité selon la revendication 5 ou 6, dans lequel au cas où un modèle de satisfaction de la condition d'initiation de rangement de ceinture de sécurité est vérifié, selon lequel le port de la ceinture de sécurité par rapport au passager de véhicule est annulé quand la portière de véhicule correspondant à ladite ceinture de sécurité est fermée, ledit moyen de commande définit le temps d'arrêt dudit moteur électrique de sorte à ce qu'il soit supérieur à un temps d'arrêt de référence (T0).

8. Dispositif de ceinture de sécurité selon la revendication 5, 6 ou 7, dans lequel au cas où un modèle de satisfaction de la condition d'initiation de rangement de ceinture de sécurité est vérifié, selon lequel le port de la ceinture de sécurité par rapport au passager de véhicule est annulé quand la portière de véhicule correspondant à ladite ceinture de sécurité est ouverte, ledit moyen de commande définit le temps d'arrêt dudit moteur électrique de sorte à ce qu'il soit inférieur à un temps d'arrêt de référence (T0).

9. Véhicule avec un dispositif de ceinture de sécurité comprenant un dispositif de ceinture de sécurité selon l'une quelconque des revendications 5 à 8, dans lequel ledit dispositif de ceinture de sécurité est logé dans un espace de logement dans le véhicule.
